# EUROPEAN PATENT APPLICATION

(11) **EP 3 751 156 A1**
(43) Date of publication of application: **16.12.2020**
(21) Application number: 19179300.9
(22) Date of filing: 11.06.2019
(51) Int. Cl.: F16B 13/06

(54) **PLASTIC DOWEL WITH TOGGLE MECHANISM WITH EXTERNAL OUTER HINGE NOTCHES**

(71) Applicant: Hilti Aktiengesellschaft, 9494 Schaan (LI)
(72) Inventor: Geisler, Frank, 87700 Memmingen (DE); Marder, Johannes, 89231 Neu-ULm (DE)
(74) Representative: Hilti Aktiengesellschaft Corporate Intellectual Property

(57) **Abstract**

The invention relates to a plastic dowel comprising toggle joints which are delimited by headward hinge notches and rearward hinge notches. According to the invention, the headward hinge notches and the rearward hinge notches are located on the lateral surface of the shank, remote from the shank through slots and remote from the screw hole. (fig. 1)

## Description

The invention relates to a plastic dowel according to the preamble of claim 1. Such a dowel comprises a tubular body, wherein the tubular body comprises a shank and a head integrally made with the shank and arranged adjacent to the shank, wherein the tubular body is provided with a screw hole, which extends along the longitudinal axis of the tubular body so as to accommodate an expander screw, wherein the shank has two shank through slots orthogonal to a middle plane of the tubular body, which middle plane comprises the longitudinal axis of the tubular body, each of which shank through slots extends along the longitudinal axis of the tubular body so as to define a first anchoring tab and a second anchoring tab, wherein the first anchoring tab has a first headward hinge notch, a first middle hinge and a first rearward hinge notch, wherein the first middle hinge is located axially between the first headward hinge notch and the first rearward hinge notch, wherein the first headward hinge notch and the first middle hinge delimit a first headward arm of a first toggle joint and wherein the first middle hinge and the first rearward hinge notch delimit a first rearward arm of the first toggle joint, wherein the second anchoring tab has a second headward hinge notch, a second middle hinge and a second rearward hinge notch, wherein the second middle hinge is located axially between the second headward hinge notch and the second rearward hinge notch, wherein the second headward hinge notch and the second middle hinge delimit a second headward arm of a second toggle joint and wherein the second middle hinge and the second rearward hinge notch delimit a second rearward arm of the second toggle joint, and wherein the head comprises an expander screw engagement ring that surrounds the screw hole, which expander screw engagement ring is adapted to engage the expander screw so as to axially bias the toggle joints to expand the toggle joints radially outwards.

A dowel of this type is disclosed in US5205688 A.

It is an object of the invention to overcome the disadvantages of prior art or to provide alternative thereto. In particular, it can be an objective of the present invention to provide a dowel that is, whilst being particularly easy to manufacture, particularly well-performing and particularly reliable, in particular in concrete and hollow brick substrates.

This object is achieved by a dowel according to claim 1. Dependent claims refer to preferred embodiments of the invention.

According to the invention, the headward hinge notches and the rearward hinge notches are located on the lateral surface of the shank, remote from the shank through slots and remote from the screw hole.

Thus, the headward hinge notches and the rearward hinge notches, which define the opposite ends of the respective toggle joints, are external notches. This design can improve the effectiveness of the toggle mechanism whilst being easy to manufacture. In particular, since the hinge notches are remote from the screw hole, the screw can act against the tubular body whilst the screw passes the hinge notches, permitting particularly efficient preliminary bulging-out of the toggle joints, which in term can provide particularly effective operation of the toggle when the screw eventually reaches the head and pulls the head backwards.

Where, in this text, the terms "axially", "radially" or "circumferentially" are used, this should, in particular, refer to the longitudinal axis of the tubular body.

It is particularly preferred that the headward hinge notches and/or the rearward hinge notches are each an imprint of a right cylinder that extends orthogonally to the middle plane. Accordingly, the hinge notches have a structure in which certain right cylinders that extend orthogonally to the middle plane would fit into. This allows particularly efficient manufacture in an injection moulding process. The bases of the cylinders can be circular, but preferably they can also have other shapes, in particular shapes including a chamfer.

Advantageously, the screw hole has a continuous zone of similar screw hole cross section, which axially extends from at least one of the toggle joints, preferably from both toggle joints, into the expander screw engagement ring. "Similarity" is to be understood in its mathematical, geometrical meaning, implying that the individual cross sections within the continuous zone of similar screw are identical or can be obtained from another by uniformly scaling. This embodiment, whilst being easy to manufacture, can further improve operation of the toggle joints. The cross section of the screw hole in the continuous zone of similar screw hole cross section can be for example circular or square-shaped.

Preferentially, the continuous zone of similar screw hole cross section axially extends along all of the length of both toggle joints. This can provide particularly efficient preliminary bulging-out of the toggle joints, whilst being easy to manufacture.

The continuous zone of similar screw hole cross section advantageously extends to the free end of the head, which can for example be advantageous from a manufacturing point of view.

It is particularly preferred that the continuous zone of similar screw hole cross section is a continuous zone of constant screw hole cross section, in particular constant except for a draft, i.e. except for a demoulding taper. This can further improve operation and manufacturing. A typical draft angle would be <1°.

In view of symmetry of forces and thus dowel performance, the toggle joints are preferably at least partly abreast. It is particularly preferred that the first headward hinge notch and the second headward hinge notch are disposed in an axially abreast relationship, and that the first rearward hinge notch and the second rearward hinge notch are disposed in an axially abreast relationship, which results in particularly high symmetry at low manufacturing effort.

According to another preferred embodiment of the invention, the shank through slots constitute the first middle hinge and the second middle hinge, at least partly. Accordingly, the middle hinge is an internal structure, which can lead to a particularly easy and yet robust and high-performing structure. The middle hinges can for example be constituted by widenings of the respective shank through slots. Or the shank through slots can each have a S-bend, wherein the first middle hinge and the second middle hinge are located at the S-bends of the shank through slots. Accordingly, the shank through slots are provided with an offset in the circumferential direction, generated by an S-bend each. For a particularly high degree of symmetry, which can be advantageous in view of performance, it can be provided that at least a section of the first middle hinge and at least a section of the second middle hinge are disposed in an axially abreast relationship.

The anchoring tabs can have greater axial length than the toggle joints. In particular, the shank through slots can extend, in particular mouthwardly, i.e. rearwardly, beyond the rearward hinge notches. In other words, they can extend from the toggle joints past the rearward hinge notches towards the mouth. This can improve substrate versatility and/or performance of the dowel.

Advantageously, the head comprises head weakening slots, each of which head weakening slots extends along the longitudinal axis from the free end of the head to the expander screw engagement ring. These head weakening slots can weaken the head, thereby facilitating screw insertion into the head. The head weakening slots are preferably through slots, thus radially extending from the lateral surface of the head into the screw hole, which can improve their effectiveness. The head weakening slots are preferably disposed orthogonal to the middle plane of the tubular body, which can facilitate manufacturing, in particular in an injection moulding process. In particular, the head weakening slots can be aligned with the headward ends of the shank through slots, which can also facilitate manufacturing, in particular in an injection moulding process.

According to another preferred embodiment of the invention, the toggle joints each comprise anchoring ribs located on the lateral surface of the shank and extending circumferentially around the longitudinal axis of the tubular body. This can improve substrate engagement and thereby increase versatility, in particular with a view to massive substrates, such as concrete substrates.

The shank can also comprise anti-spinning ribs, extending parallel to the longitudinal axis of the tubular body.

The shank through slots can preferably be disposed, at least in part, in coplanar relation to one another. This can further increase symmetry and can thus be advantageous in view of performance.

The shank through slots can for example each have a straight or a meandering pattern.

The invention is explained in greater detail below with reference to preferred exemplary embodiments, which are depicted schematically in the accompanying drawings, wherein individual features of the exemplary embodiments presented below can be implemented either individually or in any combination within the scope of the present invention.
- Figure 1:: is a side view of a plastic dowel.
- Figure 2: is cross-sectional view of the plastic dowel of figure 1 (the cross-sectional plane being the middle plane), including an expander screw, with the plastic dowel located in a borehole in a hollow brick substrate.
- Figures 3 and 4: are cross-sectional views, same cutting plane and perspective as in figure 2, of a part of the plastic dowel of figure 1, illustrating successive installation steps in the hollow brick substrate.

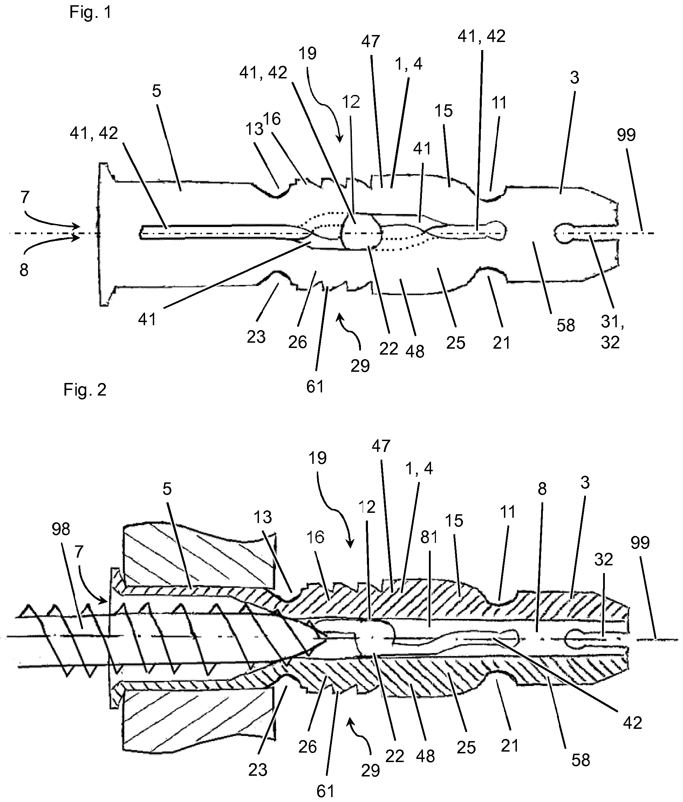

Figures 1 to 4 show a first embodiment of a plastic dowel. The dowel comprises a tubular body 1, which extends along a longitudinal axis 99. Inside the tubular body 1 is a screw hole 8 intended for receiving an expander screw 98 for radially expanding and thereby anchoring the tubular body 1 within a hole in a substrate. The tubular body 1 consists of plastic, preferably of a polymer.

The tubular body 1 comprises a head 3 and a shank 4, wherein the head 3 adjoins the shank 4 in the axial, with respect to the longitudinal axis 99, direction. The axially free end of the head 3, i.e. the end opposite to the shank 4, constitutes the tip of the dowel, intended to be inserted into a hole in a substrate. At the axially free end of the shank 4, i.e. at the end opposite to the head 3, the tubular body 1 comprises a mouth 7 for inserting the expander screw 98 into the screw hole 8.

In the shank 4 are provided two shank through slots 41, 42. Each of the shank through slots 41, 42 extends in the axial direction, along most of the axial length of the shank 4. Each of the shank through slots 41, 42 cuts through the tubular body 1, from the lateral surface into the screw hole 8. The shank through slots 41, 42 thus coalesce in the screw hole 8. The shank through slots 41, 42 are disposed orthogonal to a middle plane of the tubular body 1, which middle plane comprises the longitudinal axis 99 of the tubular body 1, and which middle plane is the drawing plane of figures 2 to 4. Said orthogonal configuration can allow particularly easy and efficient manufacturing in an injection moulding process, wherein the middle plane can be parallel to the mould parting surface of an injection mould.

The shank through slots 41, 42 are arranged at least roughly diametrically on the tubular body 1. In figure 1, shank through slot 41 is completely visible, since it is located on that side of the plastic dowel that faces the observer in figure 1, whereas shank through slot 42 is partly obscured from view by the tubular body 1. However, the shank through slots 41 and 42 are, partly, coplanar, and therefore, portions of the shank through slot 42 are visible in figure 1 as well, namely shank through slot 41. The shank through slots 41, 42 have two-fold rational symmetry around the longitudinal axis 99, and therefore have the same shape. Preferably, the whole tubular body 1 has two-fold rational symmetry around the longitudinal axis 99.

The shank through slots 41, 42 divide the shank 4 into a first anchoring tab 47 and a second anchoring tab 48, which anchoring tabs 47, 48 extend in the axial direction. The anchoring tabs 47, 48 can be displaced radially outwardly for anchoring the dowel, in particular by inserting an expander screw 98 into the screw hole 8.

On each of the anchoring tabs 47 and 48, an axially orientated toggle joint 19 and 29, respectively, is formed. The first anchoring tab 47 has thus a first toggle joint 19 and the second anchoring tab 48 a second toggle joint 29. In particular, the toggle joints 19, 29 can be intended for anchoring the dowel in a hollow brick substrate. The head 3 comprises an expander screw engagement ring 58, which surrounds the screw hole 8 in a closed, annular manner. When the dowel is placed in a hole in a hollow brick substrate and an expander screw 98 is screwed into the screw hole 8, the thread of the expander screw 98 will eventually engage the head 3, in particular the expander screw engagement ring 58 thereof. This engagement will axially force the head 3 against the shank 4, in particular once the final screw-in depth of the expander screw 98 is reached and the expander screw 98 is further rotated, leading to axial compression forces within the shank 4. This axial compression can radially expand the toggle joints 19, 29, causing the toggle joints 19, 29 to engage into laterally extending cavities of the hollow brick substrate, thereby anchoring the dowel in the substrate.

The first toggle joint 19 is defined by a first headward hinge notch 11 disposed adjacent to the head, a first rearward hinge notch 13 disposed closer to the mouth 7 than the first headward hinge notch 11, and a first middle hinge 12 disposed axially centrally between the first headward hinge notch 11 and the first rearward hinge notch 13. The first headward hinge notch 11 and the first middle hinge 12 define a first headward arm 15 of the first toggle joint 19, whereas the first middle hinge 12 and the first rearward hinge notch 13 define a first rearward arm 16 of the first toggle joint 19. The first headward arm 15 and the first rearward arm 16 get folded and pushed-out radially as the first toggle joint 19 gets axially compressed.

The first headward hinge notch 11 and the first rearward hinge notch 13 are provided tangentially on the tubular body 1, on the lateral surface of the tubular body 1. In particular, the first headward hinge notch 11 and the first rearward hinge notch 13 are distant from the shank through slots 41, 42 and do not reach the screw hole 8.

The first headward hinge notch 11 and the first rearward hinge notch 13 are both imprints of right cylinders orthogonal to the middle plane, i.e. their shapes are the negative of right cylinders orthogonal to the middle plane. This allows particularly efficient manufacturing in an injection moulding process. The respective cylinders can have circular or non-circular bases. In the shown embodiment, the cylinder relating to the first headward hinge notch 11 has an approximately cylindrical base, whereas the cylinder relating to the first rearward hinge notch 13 has a rearward chamfer.

The second toggle joint 29 is defined by a second headward hinge notch 21 disposed adjacent to the head, a second rearward hinge notch 23 disposed closer to the mouth 7 than the second headward hinge notch 21, and a second middle hinge 22 disposed axially centrally between the second headward hinge notch 21 and the second rearward hinge notch 23. The second headward hinge notch 21 and the second middle hinge 22 define a second headward arm 25 of the second toggle joint 29, whereas the second middle hinge 22 and the second rearward hinge notch 23 define a second rearward arm 26 of the second toggle joint 29. The second headward arm 25 and the second rearward arm 26 get folded and pushed-out radially as the second toggle joint 29 gets axially compressed.

The second headward hinge notch 21 and the second rearward hinge notch 23 are provided tangentially on the tubular body 1, on the lateral surface of the tubular body 1. In particular, the second headward hinge notch 21 and the second rearward hinge notch 23 are distant from the shank through slots 41, 42 and do not reach the screw hole 8.

The second headward hinge notch 21 and the second rearward hinge notch 23 are both imprints of right cylinders orthogonal to the middle plane, i.e. their shapes are the negative of right cylinders orthogonal to the middle plane. This allows particularly efficient manufacturing in an injection moulding process. The respective cylinders can have circular or non-circular bases. In the shown embodiment, the cylinder relating to the second headward hinge notch 21 has an approximately cylindrical base, whereas the cylinder relating to the second rearward hinge notch 23 has a rearward chamfer.

Both anchoring tabs 47 and 48 have the same axial length and are arranged abreast. In particular, the first headward hinge notch 11 and the second headward hinge notch 21 are arranged axially abreast and the first rearward hinge notch 13 and the second rearward hinge notch 23 are also arranged axially abreast.

The first middle hinge 12 and the second middle hinge 22 are each constituted by both shank through slots 41, 42. In particular, each of the shank through slots 41, 42 has a double bend, i.e. a S-bend, at which the respective one of the shank through slots 41, 42 has an offset in the circumferential direction. The middle hinges 12, 22 are constituted at these S-bends. The S-bends are axially abreast, so as to form a cylinder orthogonal to the middle plane. Consequently, the middle hinges 12, 22 are, at least partly, axially abreast.

The headward ends of the toggle joints 19, 29 and the headward ends of the anchoring tabs 47, 48 coincide. However, in the rearward direction, the shank through slots 41, 42 and thus the anchoring tabs 47, 48 have greater axial length than the toggle joints 19, 29, i.e. the shank through slots 41, 42 and the anchoring tabs 47, 48 extend beyond the toggle joints 19, 29, in particular beyond the rearward hinge notches 13 and 23, toward the mouth 7. The tubular body 1 thus has a neck region 5, located between the mouth 7 and the toggle joints 19, 29, in particular between the mouth 7 and the rearward hinge notches 13, 23. The shank through slots 41, 42 and the anchoring tabs 47, 48 extend into this neck region 5.

At their headward ends, the anchoring tabs 47 and 48 are held together by the expander screw engagement ring 58. An additional ring surrounding the screw hole 8 is formed at the shank 4 close to the mouth 7, namely within the neck region 5. This additional ring holds the anchoring tabs 47 and 48 together at their mouthward ends.

The head 3 is provided with head weakening slots 31, 32, which originate at the free end of the head, and which extend from there towards the shank 4, i.e. mouthwardly. The head weakening slots 31, 32 are also orientated orthogonally to the middle plane. The head weakening slots 31, 32 are aligned with the headward ends of the shank through slots 41, 42, i.e. the head weakening slots 31, 32 are located on a virtual axial headward extension of the shank through slots 41, 42.

The shank 4 of the tubular body 1 is provided with anchoring ribs 61, which are located in the lateral surface of the tubular body 1, and which surround the longitudinal axis 99. In the present embodiment, the anchoring ribs 61 are provided at the toggle joints 19, 29 only. More generally, the anchoring ribs 61 can be provided at least at the toggle joints 19, 29.

The screw hole 8 has a continuous zone 81 of similar screw hole cross section, which extends from the head 3, in particular at least from the expander screw engagement ring 58 thereof, more preferably from the tip, into the shank 4 into the toggle joints 19, 29. In the present embodiment, the continuous zone 81 of similar screw hole cross section extends all the way up to the rearward hinge notches 13, 23, i.e. the continuous zone 81 of similar screw hole cross section spans the entire toggle joints 19, 29. In the continuous zone 81 of similar screw hole cross section, the individual cross sections are geometrically similar, i.e. they are obtainable from one another by uniform scaling. In particular, the cross-section is almost constant in the continuous zone 81 of similar screw hole cross section, except for a slight rearward draft, which can facilitate demoulding. For example, a draft angle of 0.6° can be provided in the continuous zone 81 of similar screw hole cross section. Providing, except for the draft, the same cross section both between the toggle joints 19, 29 and the expander screw engagement ring 58 can lead to an initial outward displacement of the toggle joints 19, 29 already at an early stage of the installation process, in particular as the expander screw 98 passes the toggle joints 19, 29. This can lead to an initial bulging of the toggle joints 19, 29 in a hollow brick substrate, facilitating radial expansion of the toggle joints 19, 29 later during installation.

Preferably, the continuous zone 81 of similar screw hole cross section extends to the free end of the head 3, which can facilitate manufacturing.

In the present embodiment, the continuous zone 81 of similar screw hole cross section has, by way of example, circular cross section, which is, however, an example only. It could have, for example, also square cross-section.

Figures 2 to 4 schematically illustrate installation of the dowel in a hollow brick substrate. In a first step, the tubular body 1 is pushed into an essentially cylindrical hole which merges into a hollow chamber of the hollow brick substrate. Before pushing-in or afterwards, an expander screw 98 is inserted into the mouth 7 of the tubular body 1. The resulting configuration is shown in figure 2.

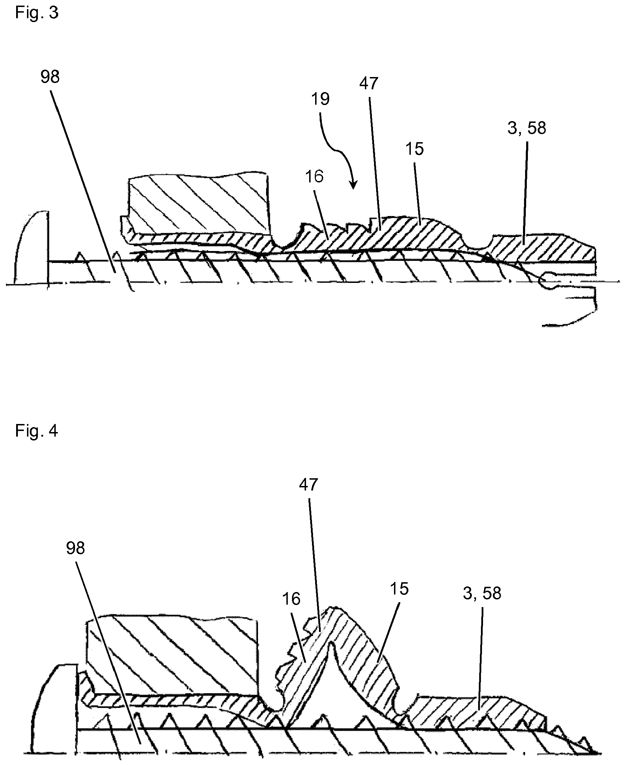

In a subsequent step, the expander screw 98 is screwed into the continuous zone 81 of similar screw hole cross section of the screw hole 8. Since the expander screw 98 is slightly oversized with respect to the continuous zone 81 of similar screw hole cross section extending between the toggle joints 19, 29, the expander screw 98 forces the toggle joints 19, 29 slightly radially outwards into the hollow chamber of the hollow brick substrate as it passes the toggle joints 19, 29. The expander screw 98 eventually reaches the expander screw engagement ring 58 of the head 3, as shown in figure 3. Once the expander screw 98 is fully screwed-in, i.e. once its head abuts, the expander screw 98 is further rotated. This will cause the head 3 of the tubular body 1, in particular the expander screw engagement ring 58 thereof, and the expander screw 98 to act like a leadscrew arrangement, which leadscrew arrangement translates the turning motion of the expander screw 98 into linear motion of the head 3 towards the shank 4. The shank 4 will thus be subjected to axially compressive force, which will result in further radial expansion of the toggle joints 19, 29 into the hollow chamber of the hollow brick substrate, causing anchorage of the tubular body 1 in substrate, as shown in figure 4.

## Claims

1. Plastic dowel comprising
- a tubular body (1), wherein the tubular body (1) comprises a shank (4) and a head (3) integrally made with the shank (4) and arranged adjacent to the shank (4),
- wherein the tubular body (1) is provided with a screw hole (8), which extends along the longitudinal axis (99) of the tubular body (1) so as to accommodate an expander screw (98),
- wherein the shank (4) has two shank through slots (41, 42) orthogonal to a middle plane of the tubular body (1), which middle plane comprises the longitudinal axis (99) of the tubular body (1), each of which shank through slots (41, 42) extends along the longitudinal axis (99) of the tubular body (1) so as to define a first anchoring tab (47) and a second anchoring tab (48),
- wherein the first anchoring tab (47) has a first headward hinge notch (11), a first middle hinge (12) and a first rearward hinge notch (13), wherein the first middle hinge (12) is located axially between the first headward hinge notch (11) and the first rearward hinge notch (13), wherein the first headward hinge notch (11) and the first middle hinge (12) delimit a first headward arm (15) of a first toggle joint (19) and wherein the first middle hinge (12) and the first rearward hinge notch (13) delimit a first rearward arm (16) of the first toggle joint (19),
- wherein the second anchoring tab (48) has a second headward hinge notch (21), a second middle hinge (22) and a second rearward hinge notch (23), wherein the second middle hinge (22) is located axially between the second headward hinge notch (21) and the second rearward hinge notch (23), wherein the second headward hinge notch (21) and the second middle hinge (22) delimit a second headward arm (25) of a second toggle joint (29) and wherein the second middle hinge (22) and the second rearward hinge notch (23) delimit a second rearward arm (26) of the second toggle joint (29), and
- wherein the head (3) comprises an expander screw engagement ring (58) that surrounds the screw hole (8), which expander screw engagement ring (58) is adapted to engage the expander screw (98) so as to axially bias the toggle joints (19, 29) to expand the toggle joints (19, 29) radially outwards,
**characterized in that**
- the headward hinge notches (11, 21) and the rearward hinge notches (13, 23) are located on the lateral surface of the shank (4), remote from the shank through slots (41, 42) and remote from the screw hole (8).

2. Dowel according to claim 1,
**characterized in that**
the headward hinge notches (11, 21) and/or the rearward hinge notches (13, 23) are each an imprint of a right cylinder that extends orthogonally to the middle plane.

3. Device according to any one of the proceeding claims,
**characterized in that**
the screw hole (8) has a continuous zone (81) of similar screw hole cross section, which axially extends from at least one of the toggle joints (19, 29) into the expander screw engagement ring (58).

4. Dowel according to claim 3,
**characterized in that**
the continuous zone (81) of similar screw hole cross section axially extends along all of the length of both toggle joints (19, 29).

5. Dowel according to any one of claims 3 or 4,
**characterized in that**
the continuous zone (81) of similar screw hole cross section extends to the free end of the head (3).

6. Dowel according to any one of claims 3 to 5,
**characterized in that**
the continuous zone (81) of similar screw hole cross section is a continuous zone of constant screw hole cross section, except for a draft.

7. Dowel according to any one of the proceeding claims,
**characterized in that**
the first headward hinge notch (11) and the second headward hinge notch (21) are disposed in an axially abreast relationship, and
the first rearward hinge notch (13) and the second rearward hinge notch (23) are disposed in an axially abreast relationship.

8. Dowel according to any one of the proceeding claims,
**characterized in that**
the shank through slots (41, 42) constitute the first middle hinge (12) and the second middle hinge (22), at least partly.

9. Dowel according to any one of the proceeding claims,
**characterized in that**
the anchoring tabs (47, 48) have greater axial length than the toggle joints (19, 29), wherein the shank through slots (41, 42) extend beyond the rearward hinge notches (13, 23).

10. Dowel according to any one of the proceeding claims,
**characterized in that**
the head (3) comprises head weakening slots (31, 32), each of which head weakening slots (31, 32) extends along the longitudinal axis (99) from the free end of the head (3) to the expander screw engagement ring (58).

11. Dowel according to claim 9,
**characterized in that**
the head weakening slots (31, 32) are disposed orthogonal to the middle plane of the tubular body (1).

12. Dowel according to any one of the proceeding claims,
**characterized in that**
the toggle joints (19, 29) each comprise anchoring ribs (61) located on the lateral surface of the shank (4) and extending circumferentially around the longitudinal axis (99) of the tubular body (1).

13. Dowel according to any one of the proceeding claims,
**characterized in that**
the shank through slots (41, 42) are disposed, at least in part, in coplanar relation to one another.
